(19) Europäisches Patentamt

European Patent Office

Office européen des brevets

(11) EP 0 640 005 B1

(12) FASCICULE DE BREVET EUROPEEN

(45) Date de publication et mention
de la délivrance du brevet:
**27.08.1997 Bulletin 1997/35**

(51) Int. Cl.$^6$: **B01D 53/48**, C01B 17/04

(21) Numéro de dépôt: **94909971.7**

(22) Date de dépôt: **16.03.1994**

(86) Numéro de dépôt international:
**PCT/FR94/00284**

(87) Numéro de publication internationale:
**WO 94/21359 (29.09.1994 Gazette 1994/22)**

(54) **PROCEDE D'ELIMINATION DES COMPOSES SOUFRES CONTENUS DANS UN GAZ RESIDUAIRE DU TYPE GAZ RESIDUAIRE D'USINE A SOUFRE CLAUS, AVEC RECUPERATION DESDITS COMPOSES SOUS LA FORME DE SOUFRE**

VERFAHREN ZUR ENTFERNUNG SCHWEFELHALTIGER VERBINDUNGEN, DIE IN EINEM ABGAS WIE ABGAS EINER CLAUS-SCHWEFELANLAGE VORHANDEN SIND, MIT ZURÜCKGEWINNUNG DIESER VERBINDUNGEN ALS SCHWEFEL

METHOD FOR REMOVING SULPHUR COMPOUNDS FROM A RESIDUAL GAS SUCH AS A RESIDUAL GAS FROM A CLAUS PROCESS SULPHUR PLANT, AND RECOVERING SAID COMPOUNDS AS SULPHUR

(84) Etats contractants désignés:
**AT BE CH DE DK ES FR GB GR IE IT LI LU MC NL PT SE**

(30) Priorité: **16.03.1993 FR 9302995**

(43) Date de publication de la demande:
**01.03.1995 Bulletin 1995/09**

(73) Titulaire: **ELF AQUITAINE PRODUCTION 92400 Courbevoie (FR)**

(72) Inventeurs:
• **PHILIPPE, André**
  **F-64300 Orthez (FR)**
• **NOUGAYREDE, Jean**
  **F-64000 Pau (FR)**
• **KVASNIKOFF, Georges**
  **F-64360 Monein (FR)**

(74) Mandataire: **Boillot, Marc et al**
**Elf Exploration Production**
**Département Propriété Industrielle**
**Tour Elf**
**EP/T/RD/DPI - Bureau 34 G 47**
**92078 Paris La Défense Cedex (FR)**

(56) Documents cités:
**EP-A- 0 345 862          EP-A- 0 346 218**
**EP-A- 0 421 500**

## Description

L'invention concerne un procédé d'élimination des composés soufrés contenus dans un gaz résiduaire du type gaz résiduaire d'usine à soufre CLAUS, avec récupération desdits composés sous la forme de soufre.

Les gaz résiduaires provenant d'une usine à soufre dans laquelle du soufre est produit par le procédé d'oxydation ménagée de gaz acide renfermant de l'$H_2S$, connu sous le nom de procédé CLAUS, contiennent de l'ordre de 0,2 à 2 % en volume de composés soufrés dont une forte proportion consiste en $H_2S$, le reste étant constitué de $SO_2$, COS, $CS_2$ et de soufre vapeur ou/et vésiculaire.

De tels gaz résiduaires sont couramment traités pour en abaisser au maximum la teneur globale en composés soufrés dans le but de permettre leur rejet à l'atmosphère, après les avoir incinérés, en respectant les normes imposées par la législation en matière de pollution atmosphérique et simultanément de récupérer ces composés soufrés sous une forme contribuant à augmenter le rendement en produits valorisables produits à partir du gaz acide traité dans l'usine à soufre.

On connaît divers procédés pour effectuer le traitement d'un gaz résiduaire d'usine à soufre CLAUS et notamment des procédés comportant un traitement combiné d'hydrogénation et d'hydrolyse du gaz résiduaire en vue d'amener les composés soufrés qu'il renferme sous l'unique forme d'$H_2S$, puis un refroidissement de l'effluent résultant dudit traitement combiné à une température appropriée pour condenser la plus grande partie de la vapeur d'eau contenue dans cet effluent et enfin un traitement de l'effluent gazeux appauvri en vapeur d'eau pour en éliminer l'$H_2S$, cette élimination de l'$H_2S$ pouvant être réalisée soit par absorption de l'$H_2S$ au moyen d'un solvant sélectif régénérable ou encore par oxydation catalytique ménagée de l'$H_2S$.

Parmi les procédés du type précité, comportant une élimination de l'$H_2S$ par oxydation catalytique en soufre, figure le procédé de la citation FR-A-2 589 082, dans lequel, après le traitement combiné d'hydrogénation et d'hydrolyse du gaz résiduaire CLAUS et refroidissement de l'effluent gazeux résultant pour en condenser la plus grande partie de l'eau, on fait passer l'effluent appauvri en vapeur d'eau avec une quantité contrôlée d'un gaz renfermant de l'oxygène libre, à une température appropriée, au contact d'un catalyseur d'oxydation de l'$H_2S$ pour former un courant gazeux contenant $H_2S$ et $SO_2$ dans un rapport molaire $H_2S:SO_2$ sensiblement égal à 2:1 ainsi que du soufre élémentaire en phase vapeur, puis on amène ledit courant gazeux, après refroidissement endessous de 160°C et éventuellement séparation du soufre qu'il contient, au contact d'un catalyseur CLAUS opérant à une température suffisamment basse pour que le soufre se formant par réaction d'$H_2S$ sur $SO_2$ soit retenu sur le catalyseur avec production d'un effluent gazeux résiduaire à teneur très réduite en composés soufrés que l'on soumet à une incinération avant rejet à l'atmosphère, et l'on balaie périodiquement le catalyseur CLAUS chargé de soufre à l'aide d'un gaz non oxydant ayant une température comprise entre 200°C et 500°C pour vaporiser le soufre retenu par ce catalyseur et assurer ainsi la régénération de ce dernier, puis on refroidit le catalyseur régénéré jusqu'à la température requise pour une nouvelle mise en contact avec le gaz renfermant $H_2S$ et $SO_2$, c'est-à-dire avec le courant gazeux issu de l'oxydation.

Dans un tel procédé, le refroidissement de l'effluent gazeux, résultant du traitement combiné d'hydrogénation et d'hydrolyse appliqué au gaz résiduaire, est conduit de manière à amener la teneur en vapeur d'eau de l'effluent gazeux refroidi à une valeur inférieure à environ 10 % en volume, ce qui entraîne la production d'une quantité importante d'eau résiduaire polluée par l'$H_2S$ qu'il est nécessaire de traiter pour en éliminer l'$H_2S$. En outre, aussi efficace que puisse être le contrôle de la quantité du gaz renfermant de l'oxygène libre que l'on utilise dans l'étape d'oxydation catalytique de l'$H_2S$ en stoechiométrie CLAUS, la possibilité subsiste que de l'oxygène non converti soit entraîné dans le courant gazeux renfermant $H_2S$ et $SO_2$ issu de l'oxydation catalytique, que l'on amène au contact du catalyseur CLAUS, avec comme conséquence un risque de désactivation dudit catalyseur CLAUS. Enfin, l'étape ultime d'élimination des composés soufrés étant la réaction de CLAUS, la qualité de l'épuration réalisée est donc tributaire de la qualité de la régulation du débit d'air injecté sur le réacteur d'oxydation.

L'invention a pour objet un procédé d'élimination des composés soufrés contenus dans un gaz résiduaire du type gaz résiduaire d'usine à soufre CLAUS, c'est-à-dire dans un gaz résiduaire qui est directement issu d'une usine à soufre CLAUS ou bien qui est issu d'une unité d'épuration traitant un gaz résiduaire d'usine à soufre en mettant en oeuvre un processus utilisant la réaction de CLAUS, avec récupération desdits composés sous la forme de soufre, lequel procédé ne comporte ni l'étape de condensation d'eau, ni l'étape de réaction CLAUS entre $H_2S$ et $SO_2$ du procédé antérieur précité et permet donc d'éliminer les inconvénients mentionnés plus haut.

La citation EP-A-0421500 concerne un procédé en deux étapes pour la désulfuration d'un gaz renfermant $H_2S$, $SO_2$, COS et/ou $CS_2$. Dans une première étape, le gaz à désulfurer est mis en contact, à des températures de 160°C à 190°C, avec un catalyseur à base de $TiO_2$ et, éventuellement en présence d'une faible quantité contrôlée d'oxygène, de manière à réaliser une hydrolyse des composés COS et $CS_2$ en $H_2S$ et une oxydation simultanée d'une faible quantité d'$H_2S$ en soufre et $SO_2$ pour former un effluent gazeux renfermant $H_2S$ et $SO_2$, dans un rapport molaire $H_2S:SO_2$ égal à 2 :1, et un peu de soufre, ledit effluent étant exempt de COS, $CS_2$ et d'oxygène. Dans une deuxième étape, l'effluent gazeux issu de la première étape est amené, après séparation du soufre qu'il contient par condensation dans un condenseur à soufre, à passer au contact d'un catalyseur CLAUS, à des températures de 100°C à 160°C, pour former du soufre par réaction de CLAUS entre $H_2S$ et $SO_2$, lequel soufre se dépose sur le catalyseur.

La citation EP-A-0346218 propose un procédé de traitement d'un gaz résiduaire d'usine à soufre renfermant $H_2S$, $SO_2$, COS et/ou $CS_2$, lequel procédé comporte une étape d'hydrolyse en $H_2S$ des composés COS et $CS_2$, par passage du gaz résiduaire au contact d'un catalyseur d'hydrolyse desdits composés à des températures entre 180°C et 400°C, pour produire un effluent gazeux renfermant $H_2S$ et $SO_2$ comme seuls composés soufrés, dans un rapport molaire $H_2S$ :$SO_2$ égal à 2 :1, et une deuxième étape de passage de l'effluent gazeux, issu de la première étape, au contact d'un catalyseur CLAUS opérant à des températures inférieures au point de rosée du soufre, pour produire du soufre par réaction CLAUS entre $H_2S$ et $SO_2$, ledit soufre se déposant sur le catalyseur.

La citation EP-A-0345862 concerne un procédé d'élimination de l'$H_2S$ contenu dans un mélange gazeux par oxydation en soufre au moyen d'oxygène, au contact d'un catalyseur consistant en charbon actif imprégné d'iodure de potassium et en opérant à des températures inférieures à 100°C et se situant, d'après l'exemple, aux environs de 50°C.

Le procédé selon l'invention est un procédé d'élimination des composés soufrés contenus dans un gaz résiduaire, qui est directement issu d'une usine à soufre CLAUS ou est issu d'une unité d'épuration traitant un gaz résiduaire d'usine à soufre en mettant en oeuvre un processus utilisant la réaction de CLAUS, avec récupération desdits composés sous la forme de soufre, ledit procédé consistant à soumettre le gaz résiduaire à un traitement combiné d'hydrogénation et d'hydrolyse pour amener les composés soufrés qu'il renferme sous l'unique forme d'$H_2S$, à refroidir ledit effluent et à faire passer l'effluent gazeux résultant refroidi, renfermant $H_2S$, avec un gaz renfermant de l'oxygène libre, dans un rapport molaire $O_2$ :$H_2S$ allant de 0,5 à 3, au contact d'un catalyseur d'oxydation de l'$H_2S$ en soufre, qui consiste en une phase active à base d'un ou plusieurs oxydes et/ou sels d'un ou plusieurs métaux de transition déposée sur un support et se caractérisant en ce que l'on refroidit l'effluent gazeux, issu du traitement combiné d'hydrogénation et d'hydrolyse, à une température comprise entre 80°C et 100°C et l'on réalise la mise en contact de l'effluent gazeux refroidi et du gaz renfermant de l'oxygène libre avec le catalyseur d'oxydation de l'$H_2S$ en soufre en opérant à des températures, qui sont maintenues, pendant toute la durée de ladite mise en contact, à des valeurs choisies entre 80°C et 140°C pour oxyder substantiellement quantitativement en soufre l'$H_2S$ présent dans ledit effluent gazeux sans former de $SO_2$ et déposer la quasi totalité du soufre formé sur le catalyseur et obtenir un courant gazeux épuré, pratiquement exempt d'$H_2S$.

En mettant en oeuvre la réaction d'oxydation catalytique de l'$H_2S$ en soufre dans l'intervalle de température selon l'invention, l'$H_2S$ est oxydé sélectivement en soufre sans formation de $SO_2$ même en présence d'un excès d'oxygène.

En d'autres termes, dans le procédé selon l'invention, on peut travailler avec un large excès d'oxygène par rapport à la stoechiométrie de la réaction

$$H_2S + \tfrac{1}{2} O_2 \rightarrow H_2O + S,$$

tout en conservant une conversion quasi quantitative de l'$H_2S$ et une excellente sélectivité en soufre, ce qui permet d'obtenir un rendement en soufre pratiquement indépendant de la qualité de la régulation du débit d'oxygène sur le catalyseur d'oxydation.

Au cours de l'étape combinée d'hydrogénation et d'hydrolyse, qui est habituelleemnt effectuée en présence d'un catalyseur, les composés soufrés tels que $SO_2$, $CS_2$, COS ainsi que le soufre vapeur et/ou vésiculaire contenus dans le gaz résiduaire sont transformés en $H_2S$ soit sous l'action de l'hydrogène, cas de $SO_2$ et du soufre vapeur ou/et vésiculaire, ou par hydrolyse, cas de COS et $CS_2$, sous l'action de la vapeur d'eau présente dans ledit gaz résiduaire. Le traitement combiné d'hydrogénation et d'hydrolyse est réalisé à des températures pouvant aller de 140°C à 550°C environ et de préférence se situant entre 200°C et 400°C environ. L'hydrogène nécessaire à la réaction d'hydrogénation peut être déjà contenu dans le gaz résiduaire ou être formé in situ dans la zone d'hydrogénation et d'hydrolyse, par exemple par réaction de CO sur $H_2O$ lorsque le gaz résiduaire renferme ces deux réactifs, ou encore être ajouté au gaz résiduaire à partir d'une source extérieure d'hydrogène. Une manière commode de fournir $H_2$ et CO au gaz résiduaire consiste à ajouter audit gaz résiduaire les gaz de combustion produits par un brûleur de gaz combustible fonctionnant en sous stoechiométrie. La quantité d'hydrogène à utiliser doit être suffisante pour obtenir une transformation pratiquement complète en $H_2S$ des composés ou produits soufrés hydrogénables, tels que $SO_2$, soufre vapeur et/ou vésiculaire, contenus dans le gaz résiduaire soumis au traitement d'hydrogénation et d'hydrolyse. En pratique, la quantité d'hydrogène employée peut aller de 1 à 6 fois la quantité stoechiométrique requise pour transformer en $H_2S$ les produits soufrés hydrogénables présents dans le gaz résiduaire.

Si le gaz résiduaire ne renferme pas suffisamment de vapeur d'eau pour l'hydrolyse des composés organiques du soufre COS et $CS_2$, on peut lui ajouter la quantité requise de vapeur d'eau avant d'effectuer le traitement combiné d'hydrogénation et d'hydrolyse.

Des catalyseurs utilisables pour le traitement d'hydrogénation et d'hydrolyse sont ceux qui contiennent des composés de métaux des groupes Va, VIa et VIII de la Classification Périodique des Eléments, par exemple des composés de métaux tels que cobalt, molybdène, chrome, vanadium, thorium, nickel, tungstène, uranium, lesdits composés étant déposés ou non sur un support du type silice, alumine, silice/alumine. Sont particulièrement efficaces pour le traitement d'hydrogénation et d'hydrolyse les catalyseurs d'hydrodésulfuration à base d'oxydes de cobalt et de molybdène déposés sur alumine. Pour ce traitement d'hydrogénation et d'hydrolyse, les temps de contact entre le milieu réactionnel gazeux et le catalyseur peuvent varier assez largement. Ils se situent avantageusement entre 0,5 et 8 secondes et plus particulièrement entre 1 et 5 secondes, ces valeurs étant données dans les conditions normales de pression et de température.

L'effluent gazeux résultant du traitement combiné d'hydrogénation et d'hydrolyse du gaz résiduaire, est soumis à un refroidissement, réalisé en faisant appel à toute technique connue et par exemple à un échange indirect de calories avec un fluide plus froid, pour amener sa température entre 80°C et 100°C.

L'effluent gazeux refroidi jusqu'à la température située entre 80°C et 100°C est ensuite additionné de la quantité requise du gaz renfermant de l'oxygène libre, cette addition pouvant être réalisée soit au cours de la mise en contact dudit effluent gazeux refroidi avec le catalyseur d'oxydation de l'$H_2S$ en soufre ou, de préférence, avant ladite mise en contact afin d'obtenir un milieu réactionnel très homogène lors du contact avec ledit catalyseur.

Le gaz renfermant de l'oxygène libre utilisé pour l'oxydation, en soufre, de l'$H_2S$ contenu dans le gaz à traiter est généralement de l'air, bien qu'il soit possible d'employer de l'oxygène pur, de l'air enrichi en oxygène, ou encore des mélanges, en proportions variées, d'oxygène et d'un gaz inerte autre que l'azote.

Comme indiqué précédemment, le gaz renfermant de l'oxygène libre est utilisé en quantité propre à fournir un rapport molaire $O_2$:$H_2S$ allant de 0,5 à 3 et plus particulièrement de 0,5 à 1,5 dans le milieu réactionnel arrivant au contact du catalyseur d'oxydation de l'$H_2S$ en soufre.

Les temps de contact du milieu réactionnel gazeux avec le catalyseur d'oxydation peuvent aller de 0,5 seconde à 20 secondes et de préférence de 1 seconde à 15 secondes, ces valeurs étant données dans les conditions normales de pression et de température.

Le catalyseur d'oxydation peut être choisi parmi les divers catalyseurs susceptibles de promouvoir l'oxydation sélective de l'$H_2S$ en soufre par l'oxygène, c'est-à-dire de promouvoir la réaction

$$H_2S + {}^1\!/_2\, O_2 \rightarrow S + H_2O,$$

à des températures inférieures au point de rosée du soufre formé, lequel soufre se dépose alors sur le catalyseur.

En particulier, le catalyseur d'oxydation peut être constitué d'une phase active, consistant en un ou plusieurs oxydes et/ou sels, d'un ou plusieurs métaux de transition tels que nickel, cobalt, fer, cuivre, argent, manganèse, molybdène, chrome, tungstène et vanadium, déposée sur un support en un matériau réfractaire tel que, par exemple, bauxite, alumine activée et/ou stabilisée, oxyde de titane, oxyde de zirconium, zéolithes, mélanges silice/alumine, mélanges silice/oxyde de titane, silice, ou bien sur un support en charbon actif.

Le catalyseur d'oxydation présente un volume poreux permettant une charge en soufre importante. Avantageusement, le volume poreux du catalyseur, déterminé par la méthode de pénétration au mercure, représente 150 $cm^3$ à 600 $cm^3$ par litre de catalyseur.

La phase active, comptée en poids de métal, représente le plus souvent 0,1 à 15 % et de préférence 0,2 à 7 % du poids du catalyseur d'oxydation.

Pour conserver la sélectivité du catalyseur d'oxydation pour l'oxydation de l'$H_2S$ en soufre, il est nécessaire de maintenir ledit catalyseur à une température comprise entre 80°C et 140°C tout au long de l'étape d'oxydation de l'$H_2S$. Si la concentration en $H_2S$ ou/et la température, comprise entre 80°C et 100°C, de l'effluent gazeux renfermant $H_2S$ amené au contact du catalyseur d'oxydation, sont telles que, du fait de la forte exothermicité de la réaction

$$H_2S + {}^1\!/_2\, O_2 \rightarrow S + H_2O,$$

la température du milieu réactionnel, à l'issue de l'oxydation, est susceptible de dépasser 140°C, on évacue les calories dégagées par ladite réaction en soumettant le catalyseur à un refroidissement, par toute méthode connue. On peut, par exemple, réaliser ce refroidissement à l'aide d'un fluide froid circulant en échange indirect de chaleur avec ledit catalyseur au sein de ce dernier. On peut encore opérer en plaçant le catalyseur dans un réacteur tubulaire constitué de tubes disposés dans une calandre avec, par exemple, le catalyseur présent dans les tubes et un fluide froid circulant entre les tubes côté calandre. On peut également effectuer l'oxydation catalytique dans un réacteur à plusieurs étages de catalyseur avec refroidissement du milieu réactionnel entre les étages successifs par échange indirect de chaleur avec un fluide froid, l'échange de chaleur ayant lieu à l'intérieur ou à l'extérieur du réacteur d'oxydation.

Avantageusement, l'oxydation de l'$H_2S$ en soufre, au contact du catalyseur d'oxydation, est mise en oeuvre à des températures allant de 90°C à 120°C.

Le gaz issu de la mise en contact de l'effluent gazeux renfermant $H_2S$ et du gaz renfermant de l'oxygène libre avec le catalyseur d'oxydation, peut être soumis, si besoin est, à une incinération thermique ou catalytique, pour transformer en $SO_2$ les traces d'$H_2S$ qu'il peut encore contenir, avant d'être rejeté à l'atmosphère.

Au cours de l'oxydation de l'$H_2S$ en soufre, le catalyseur d'oxydation se charge progressivement en soufre. Périodiquement, on procède à la régénération du catalyseur chargé de soufre par balayage dudit catalyseur à l'aide d'un gaz non oxydant en opérant à des températures comprises entre 200°C et 500°C et de préférence entre 250°C et 450°C pour vaporiser le soufre retenu sur le catalyseur, puis on refroidit le catalyseur régénéré jusqu'à une température comprise entre θ et 180°C pour une nouvelle mise en oeuvre de la réaction d'oxydation, ce refroidissement étant réalisé au moyen d'un gaz inerte ayant une température appropriée inférieure à 180°C. Le gaz de refroidissement peut être éventuellement chargé de vapeur d'eau au moins pendant la phase finale du refroidissement du catalyseur.

Le gaz de balayage, utilisé pour la régénération du catalyseur d'oxydation chargé de soufre, peut être tel que méthane, azote, $CO_2$ ou mélanges de tels gaz ou encore consister en une fraction du courant gazeux issu de l'étape d'oxydation et dirigé vers l'incinération ou en une fraction du gaz résiduaire à traiter. Le gaz de balayage utilisé pour la régénération précitée peut éventuellement contenir une certaine proportion d'un composé réducteur gazeux tel que, par exemple, $H_2$, CO ou $H_2S$, au moins au cours de la phase finale de la régénération, c'est-à-dire après la vaporisation de la plus grande partie du soufre déposé sur le catalyseur d'oxydation, ceci pour réduire des sulfates qui auraient pu se former avec certains catalyseurs pendant la phase d'épuration. Un tel gaz de balayage peut consister notamment en une fraction du gaz acide traité dans l'usine à soufre dont est issu le gaz résiduaire ou bien encore en une fraction de l'effluent gazeux renfermant de l'$H_2S$ issu du traitement combiné d'hydrogénation et d'hydrolyse.

La mise en oeuvre de la réaction d'oxydation catalytique selon l'invention peut être réalisée dans une zone unique d'oxydation catalytique, qui opère alternativement en phase d'oxydation et en phase de régénération/refroidissement. Une telle mise en oeuvre est retenue lorsque le gaz à traiter renferme peu d'$H_2S$ et que, de ce fait, la régénération du catalyseur est peu fréquente. Avantageusement, la mise en oeuvre de la réaction catalytique, selon l'invention, est réalisée dans une pluralité de zones d'oxydation catalytique, qui opèrent de telle sorte que l'une au moins desdites zones opère en phase de régénération/refroidissement, tandis que les autres zones sont en phase d'oxydation catalytique. On peut encore opérer en ayant une ou plusieurs zones en phase de réaction d'oxydation catalytique, au moins une zone en phase de régénération et au moins une zone en phase de refroidissement.

Le gaz utilisé pour la régénération du catalyseur d'oxydation circule de préférence en circuit fermé à partir d'une zone de chauffage, en passant successivement par la zone catalytique en cours de régénération et une zone de refroidissement, dans laquelle la majeure partie du soufre présent dans ledit gaz est séparée par condensation, pour revenir à la zone de chauffage. Bien entendu, le gaz de régénération peut également circuler en circuit ouvert.

Le gaz utilisé pour le refroidissement du catalyseur d'oxydation régénéré est du même type que celui employé pour la régénération du catalyseur chargé de soufre. Les circuits de gaz de régénération et de gaz de refroidissement peuvent être indépendants l'un de l'autre. Toutefois, selon un mode de réalisation, le circuit de gaz de régénération, défini plus haut, peut également comporter une dérivation reliant la sortie de sa zone de refroidissement à l'entrée de la zone en cours de régénération en bipassant sa zone de chauffage, ce qui permet de court-circuiter ladite zone de chauffage et ainsi d'utiliser le gaz de régénération comme gaz de refroidissement.

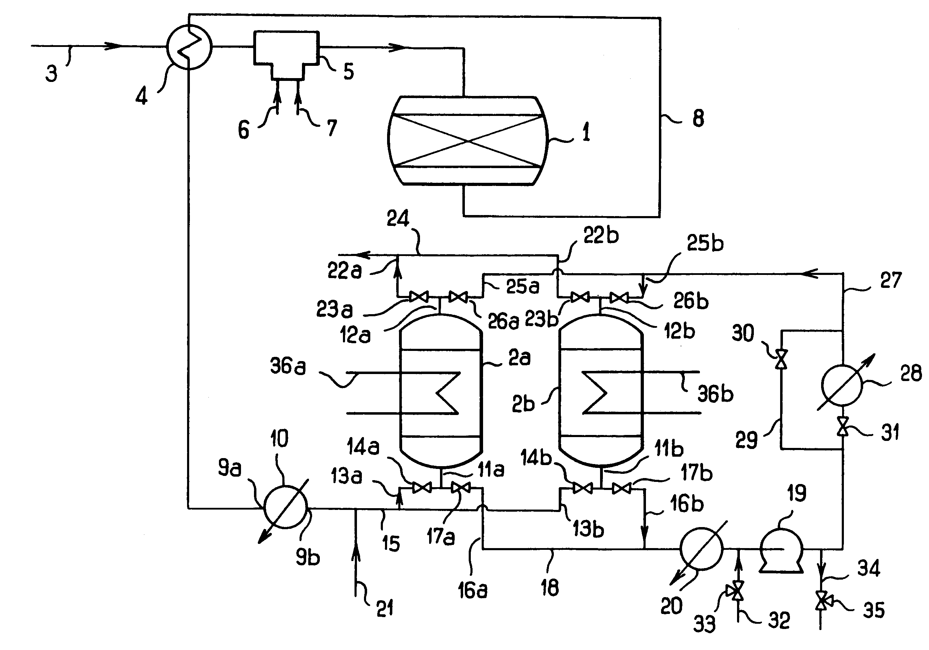

L'invention sera mieux comprise à la lecture de la description donnée ci-après de l'une de ses formes de réalisation utilisant le dispositif représenté schématiquement sur la figure du dessin annexé.

Ce dispositif associe un réacteur 1 d'hydrogénation et d'hydrolyse et deux réacteurs d'oxydation catalytique 2a et 2b, lesdits réacteurs d'oxydation catalytique étant montés en parallèle et renfermant chacun un lit d'un catalyseur d'oxydation de l'$H_2S$ en soufre. Le réacteur 1 possède d'une part, un conduit 3 d'amenée du gaz résiduaire à traiter, issu d'une usine à soufre ou d'une unité de traitement, par exemple unité SULFREEN, produisant un gaz résiduaire de composition comparable, sur lequel sont intercalés le circuit froid d'un échangeur indirect de chaleur 4 du type échangeur gaz/gaz, puis un brûleur 5 muni d'une tubulure 6 d'amenée d'un gaz combustible et d'une tubulure 7 d'amenée d'air, et, d'autre part, un conduit 8 d'évacuation pour les gaz. Ledit conduit 8 est connecté, à travers le circuit chaud de l'échangeur indirect de chaleur 4, à l'entrée 9a d'un échangeur indirect de chaleur 10.

Les réacteurs d'oxydation catalytique 2a et 2b sont munis d'un premier conduit, respectivement 11a et 11b, et d'un second conduit, respectivement 12a et 12b, situés de part et d'autre du lit catalytique présent dans chacun desdits réacteurs. Le conduit 11a du réacteur 2a est relié d'une part, par un conduit 13a muni d'une vanne 14a, à un conduit 15 monté à la sortie 9b de l'échangeur de chaleur 10 et d'autre part, par un conduit 16a muni d'une vanne 17a, à un conduit 18 connecté lui-même à l'orifice d'aspiration d'une soufflante 19 et sur lequel est monté un condenseur à soufre 20. De même, le conduit 11b du réacteur 2b est connecté d'une part, par un conduit 13b muni d'une vanne 14b, au conduit 15, en aval de la jonction du conduit 13a avec ledit conduit 15, et d'autre part, par un conduit 16b pourvu d'une vanne 17b, au conduit 18 en un point de ce dernier situé entre le conduit 16a et le condenseur à soufre 20. En amont de sa connexion avec le conduit 13a, le conduit 15 porte en dérivation une tubulure 21 d'addition d'un gaz renfermant de l'oxygène libre.

Le conduit 12a du réacteur 2a est relié d'une part, par un conduit 22a muni d'une vanne 23a, à un conduit 24 d'évacuation du gaz résiduaire épuré vers un réacteur d'incinération non représenté et de là à l'atmosphère et d'autre part, par un conduit 25a muni d'une vanne 26a, à un conduit 27 prolongeant l'orifice de refoulement de la soufflante 19. Le conduit 27 porte un réchauffeur 28 et une dérivation 29, qui est munie d'une vanne 30 et court-circuite le réchauffeur, et il comporte également une vanne 31 située entre le réchauffeur et la partie de la dérivation 29 en amont de ce dernier. De même le conduit 12b du réacteur 2b est connecté, par un conduit 22b muni d'une vanne 23b, au conduit 24 d'évacuation du gaz résiduaire épuré et d'autre part, par un conduit 25b muni d'une vanne 26b, au conduit 27, en un point de ce dernier situé entre la dérivation 29 et le conduit 25a. Un conduit 32 muni d'une vanne 33 à débit ajustable est monté en dérivation sur le conduit 18, entre le condenseur à soufre 20 et la soufflante 19, et constitue un conduit d'amenée d'un gaz d'appoint, tandis qu'un conduit 34 muni d'une vanne 35 à débit ajustable est monté en dérivation sur le conduit 27 entre la soufflante 19 et la jonction de la dérivation 29 avec le conduit 27 en amont de la vanne 31 et constitue un conduit de purge. Chacun des réacteurs catalytiques 2a et 2b est équipé d'un système de maintien du lit catalytique en température, ledit système pouvant être de tout type connu comme indiqué précédemment et consistant, par exemple, dans le cas présent, en un serpentin, respectivement 36a et 36b, qui est disposé au sein du lit catalytique présent dans le réacteur concerné et qui est parcouru par un fluide ayant une température appropriée pour obtenir l'effet recherché, à savoir refroidissement ou chauffage.

Le déroulement du procédé dans ce dispositif peut être schématisé comme suit :

On suppose que le réacteur 2a est en phase d'oxydation catalytique, tandis que le réacteur 2b est en phae de régénération, les vannes 14a, 17b, 23a, 26b et 31 étant ouvertes, tandis que les vannes 14b, 17a, 23b, 26a et 30 sont fermées.

Le gaz résiduaire arrivant de l'usine à soufre par le conduit 3, passe dans l'échangeur de chaleur 4, puis traverse le brûleur 5, dans lequel il est mélangé aux gaz de combustion produits par ce brûleur, qui réalise une combustion d'un gaz combustible au moyen d'air en opérant en sous-stoechiométrie pour fournir, outre des calories, une quantité appropriée d'$H_2$ et de CO. Lors de son passage dans le brûleur 5, le gaz résiduaire est réchauffé, par les gaz de combustion, à la température requise pour l'hydrogénation, par exemple 200°C à 400°C, et en même temps il reçoit également l'hydrogène et le CO produit lors de la combustion. Le mélange chaud du gaz résiduaire et des gaz de combustion issu du brûleur 5 passe dans le réacteur 1 d'hydrogénation et d'hydrolyse renfermant une quantité appropriée d'un catalyseur susceptible de promouvoir l'hydrogénation du $SO_2$ et du soufre élémentaire en $H_2S$ ainsi que l'hydrolyse des composés COS et $CS_2$, ledit catalyseur étant par exemple à base de cobalt et de molybdène. Dans le réacteur 1, les composés soufrés, autres que $H_2S$, présents dans le gaz résiduaire, sont convertis quasi complètement en $H_2S$. L'effluent gazeux sortant, par le conduit 8, du réacteur 1, dont la température est de l'ordre de 280°C à 450°C, passe ensuite dans l'échangeur de chaleur 4, ou il réchauffe le gaz résiduaire passant dans le conduit 3, puis dans l'échangeur 10 pour obtenir à la sortie de l'échangeur 10 un effluent gazeux refroidi ayant une température entre 80°C et 100°C ledit effluent étant amené, par le conduit 15, au réacteur d'oxydation 2a par le conduit 13a, à travers la vanne 14a, et le conduit 11a, après avoir reçu, par le conduit 21, une quantité contrôlée de gaz renfermant de l'oxygène libre et notamment d'air pour la réalisation de l'oxydation de l'$H_2S$ en soufre.

Dans le réacteur 2a, qui tout comme le réacteur 2b contient un catalyseur d'oxydation de l'$H_2S$ en soufre et par exemple un catalyseur tel que décrit plus haut, l'$H_2S$ est oxydé sélectivement en soufre par l'oxygène au contact du catalyseur d'oxydation selon la réaction

$$H_2S + {}^1/_2\,O2 \rightarrow S + H_2O.$$

Aux températures, maintenues entre 80°C et 140°C et plus spécialement dans l'intervalle 90°C à 120°C, utilisées pour la mise en oeuvre de l'oxydation, le soufre formé par l'oxydation de l'$H_2S$ se dépose sur ledit catalyseur. Par le conduit 12a du réacteur, sort un gaz résiduaire épuré à teneur extrêmement réduite en $H_2S$ résiduel, qui est dirigé par le conduit 22a, à travers la vanne 23a, dans le conduit 24 d'évacuation acheminant ledit gaz résiduaire épuré vers un réacteur d'incinération thermique ou catalytique non représenté.

Un courant de gaz non oxydant de balayage est envoyé par la soufflante 19 dans le conduit 27 à travers la vanne 31 et le réchauffeur 28, dans lequel ce courant gazeux est réchauffé à la température appropriée pour la régénération. Le courant de gaz réchauffé, circulant dans le conduit 27, est introduit dans le réacteur 2b par le conduit 25b, à travers la vanne 26b et le conduit 12b, et balaie le catalyseur d'oxydation chargé de soufre contenu dans ledit réacteur. Le courant de gaz de balayage, entraînant le soufre vaporisé, sort du réacteur 2b par le conduit 11b et s'écoule par le conduit 16b, à travers la vanne 17b, et le conduit 18 jusqu'au condenseur à soufre 20, dans lequel la majeure partie du soufre se sépare par condensation. A la sortie du condenseur 20, le courant de gaz de balayage est repris par la soufflante 19 pour être refoulé dans le conduit 27, comme indiqué plus haut.

Après une durée suffisante de balayage du catalyseur contenu dans le réacteur 2b par le gaz de balayage passant dans le réchauffeur 28 pour éliminer complètement le soufre déposé sur le catalyseur, on ouvre la vanne 30 et ferme la vanne 31 de manière à court-circuiter le réchauffeur 28 et à abaisser la température du gaz de balayage, et l'on poursuit le balayage pendant une durée appropriée en faisant circuler en même temps, si besoin est, un fluide à température appropriée dans le système 36b, pour refroidir le catalyseur régénéré contenu dans le réacteur 2b.

Lorsque ledit catalyseur a été refroidi à une température convenable, permettant la mise en contact du catalyseur avec le courant passant dans le circuit 15 en aval de la tubulure 21, on permute les rôles joués par les réacteurs 2a et 2b, c'est-à-dire qu'on amène le réacteur 2b en phase de réaction d'oxydation et le réacteur 2a en phase de régénération/refroidissement en fermant les vannes 14a, 17b, 23a, 26b et 30 et en ouvrant les vannes 14b, 17a, 23b, 26a et 31, puis au stade de refroidissement en fermant la vanne 31 et en ouvrant la vanne 30. Pendant la période transitoire de permutation du rôle des réacteurs d'oxydation catalytique 2a et 2b, on amène le gaz de balayage à circuler dans un conduit non représenté bipassant ces réacteurs.

Selon une forme de mise en oeuvre du procédé selon l'invention, le conduit 32 peut être connecté au conduit 8, entre le réacteur 1 d'hydrogénation et d'hydrolyse et l'échangeur de chaleur 10, ou au conduit 15, entre l'échangeur de chaleur 10 et la tubulure 21 d'addition de gaz renfermant de l'oxygène libre, de manière à introduire en continu dans le circuit de gaz de régénération une fraction de l'effluent gazeux renfermant $H_2S$, qui est issu du réacteur 1 d'hydrogénation et d'hydrolyse et n'a pas encore été additionné du gaz renfermant de l'oxygène libre et l'on évacue en continu, par le conduit 34, une fraction du gaz de balayage servant à la régénération de telle sorte que la fraction d'effluent gazeux renfermant $H_2S$ et la fraction de gaz de balayage aient des volumes substantiellement égaux. De préférence, dans cette forme de mise en oeuvre, le conduit 34 est connecté au conduit 3 d'amenée du gaz résiduaire à traiter, avantageusement en amont du brûleur 5 et en particulier en amont de l'échangeur de chaleur 4, de manière à recycler ladite fraction de gaz de balayage dans le gaz résiduaire à traiter amené au traitement combiné d'hydrogénation et d'hydrolyse.

Pour compléter la description précédente, on donne, ci-après, à titre non limitatif, un exemple de mise en oeuvre du procédé selon l'invention.

### EXEMPLE :

En faisant appel à un dispositif analogue à celui schématisé sur la figure du dessin annexé et fonctionnant comme décrit précédemment, on traitait un gaz résiduaire issu d'une usine à soufre CLAUS dans laquelle on effectuait l'oxydation ménagée, par l'air, d'un gaz acide constitué, en volume, de 70% d'$H_2S$, 25,4% de $CO_2$, 4% d'eau et 0,6% d'hydrocarbures.

Le gaz résiduaire traité avait la composition suivante, exprimée en pourcentage molaire :

| | |
|---|---|
| $H_2S$ | 0,79 |
| $SO_2$ | 0,40 |
| S (vapeur) | 0,07 |
| $CO_2$ | 10,60 |
| $H_2O$ | 30,90 |
| $N_2$ | 54,20 |
| $H_2$ | 2,20 |
| CO | 0,78 |
| COS | 0,03 |
| $CS_2$ | 0,03 |

Le gaz résiduaire, arrivant par le conduit 3 avec un débit de 922 kmoles/heure et une température d'environ 132°C, était porté à environ 280°C après passage dans l'échangeur indirect de chaleur 4 et le brûleur 5 et entrait à cette température dans le réacteur 1 d'hydrogénation et d'hydrolyse contenant un catalyseur du type cobalt/molybdène sur support d'alumine.

Dans le réacteur 1, la conversion de $SO_2$, S, COS et $CS_2$ en $H_2S$ était pratiquement totale et l'effluent gazeux, sortant dudit réacteur 1, avait une température de 305°C et ne renfermait que $H_2S$ comme composé soufré. Cet effluent gazeux, dont le débit était égal à 940 kmoles/heure, était refroidi jusqu'à 90°C, par passage dans l'échangeur de chaleur 4 et dans l'échangeur de chaleur 10, puis était additionné, par la tubulure 21, de 44 kmoles/heure d'air ambiant et le mélange obtenu pénétrait dans le réacteur 2a en phase de réaction d'oxydation avec une température sensiblement égale à 90°C.

Le catalyseur, utilisé dans les réacteurs d'oxydation 2a et 2b, consistait en une alumine au nickel renfermant en poids 4% de nickel, ledit catalyseur étant obtenu par imprégnation d'une alumine activée à l'aide de la quantité appropriée d'acétate de nickel en solution aqueuse, puis séchage à 100°C de l'alumine imprégnée et enfin calcination du produit séché à 300°C pendant 3 heures. Ce catalyseur présentait un volume poreux, déterminé par la méthode de pénétration au mercure, égal à 410 $cm^3$ par litre de catalyseur.

Le temps de contact du mélange gazeux, passant dans le réacteur 2a d'oxydation avec la couche de catalyseur d'oxydation, était égal à 10 secondes. Le taux de conversion de l'$H_2S$ en soufre, dans le réacteur d'oxydation, était égal à 98%. A la sortie du réacteur 2a, on évacuait un courant gazeux ayant une température d'environ 110°C et renfermant 250 vpm d'$H_2S$, ledit courant gazeux étant acheminé vers un incinérateur avant son rejet à l'atmosphère.

Le gaz de balayage, injecté dans le réacteur 2b, aux fins de régénération du catalyseur d'oxydation chargé de soufre, consistait en azote et était délivré par la soufflante 19 avec un débit de 12000 Nm$^3$/h. Ledit gaz de balayage était porté, par le réchauffeur 28, à une température comprise entre 300 et 350°C avant d'être introduit dans le réacteur 2b en phase de régénération. Lors de la phase de refroidissement du catalyseur régénéré, le réchauffeur 28 était bipassé et après que la température du gaz de balayage ait été abaissée à environ 125°C, un fluide à température de 80°C était amené à circuler dans le serpentin 36b en poursuivant le balayage.

Les réacteurs 2a et 2b opéraient alternativement pendant 30 heures en phase d'épuration, c'est-à-dire en phase de réaction, et pendant 30 heures, dont 10 heures de refroidissement, en phase de régénération/refroidissement.

L'usine à soufre, incorporant le procédé selon l'invention pour traiter les gaz résiduaires produits par ladite usine avait un rendement global en soufre de 99,9% sur une période de plusieurs mois.

## Revendications

1. Procédé d'élimination des composés soufrés contenus dans un gaz résiduaire, qui est directement issu d'une usine à soufre CLAUS ou est issu d'une unité d'épuration traitant un gaz résiduaire d'usine à soufre en mettant en oeuvre un processus utilisant la réaction de CLAUS, avec récupération desdits composés sous la forme de soufre, ledit procédé consistant à soumettre le gaz résiduaire à un traitement combiné d'hydrogénation et d'hydrolyse pour amener les composés soufrés qu'il renferme sous l'unique forme d'H$_2$S, à refroidir ledit effluent et à faire passer l'effluent gazeux résultant refroidi, renfermant H$_2$S, avec un gaz renfermant de l'oxygène libre, dans un rapport molaire O$_2$:H$_2$S allant de 0,5 à 3, au contact d'un catalyseur d'oxydation de l'H$_2$S en soufre, qui consiste en une phase active à base d'un ou plusieurs oxydes et/ou sels d'un ou plusieurs métaux de transition déposée sur un support et se caractérisant en ce que l'on refroidit l'effluent gazeux, issu du traitement combiné d'hydrogénation et d'hydrolyse, à une température comprise entre 80°C et 100°C et l'on réalise la mise en contact de l'effluent gazeux refroidi et du gaz renfermant de l'oxygène libre avec le catalyseur d'oxydation de l'H$_2$S en soufre en opérant à des températures, qui sont maintenues, pendant toute la durée de ladite mise en contact, à des valeurs choisies entre 80°C et 140°C pour oxyder substantiellement quantitativement en soufre l'H$_2$S présent dans ledit effluent gazeux sans former de SO$_2$ et déposer la quasi totalité du soufre formé sur le catalyseur et obtenir un courant gazeux épuré, pratiquement exempt d'H$_2$S.

2. Procédé selon la revendication 1, caractérisé en ce que ledit rapport molaire O$_2$:H$_2$S va de 0,5 à 1,5.

3. Procédé selon la revendication 1 ou 2, caractérisé en ce que le temps de contact du milieu réactionnel gazeux, formé de l'effluent gazeux renfermant H$_2$S et du gaz renfermant de l'oxygène libre, avec le catalyseur d'oxydation, a une valeur allant de 0,5 seconde à 20 secondes, dans les conditions normales de pression et de température.

4. Procédé selon la revendication 3, caractérisé en ce que ledit temps de contact va de 1 seconde à 15 secondes.

5. Procédé selon l'une des revendications 1 à 4, caractérisé en ce que le catalyseur d'oxydation consiste en une phase active, constituée d'un ou plusieurs oxydes et/ou sels de métaux de transition choisis parmi nickel, cobalt, fer, cuivre, argent, manganèse, molybdène, chrome, tungstène et vanadium, déposée sur un support choisi parmi bauxite, alumine, oxyde de titane, oxyde de zirconium, zéolithes, mélanges silice/alumine, mélanges silice/oxyde de titane, silice et charbon actif.

6. Procédé selon l'une des revendications 1 à 5, caractérisé en ce que le catalyseur d'oxydation présente un volume poreux, déterminé par la méthode de pénétration au mercure, allant de 150 cm$^3$ à 600 cm$^3$ par litre de catalyseur.

7. Procédé selon l'une des revendications 1 à 6, caractérisé en ce que la phase active du catalyseur d'oxydation, comptée en poids de métal, représente 0,1 à 15% du poids dudit catalyseur.

8. Procédé selon la revendication 7, caractérisé en ce que la phase active du catalyseur d'oxydation, comptée en poids de métal, représente 0,2 à 7 % du poids dudit catalyseur.

9. Procédé selon l'une des revendications 1 à 8, caractérisé en ce que le catalyseur d'oxydation, chargé de soufre, est soumis, périodiquement, à une régénération par balayage à l'aide d'un gaz non oxydant en opérant à des températures comprises entre 200°C et 500°C pour vaporiser le soufre retenu sur le catalyseur, puis le catalyseur régénéré est refroidi jusqu'à une température comprise entre 80°C et 140°C pour une nouvelle mise en oeuvre de la réaction d'oxydation, ce refroidissement étant réalisé au moyen d'un gaz inerte.

10. Procédé selon la revendication 9, caractérisé en ce que ladite régénération est réalisée à des températures comprises entre 250°C et 450°C.

11. Procédé selon la revendication 9 ou 10, caractérisé en ce que le gaz de refroidissement est chargé de vapeur d'eau au moins pendant la phase finale du refroidissement du catalyseur régénéré.

**12.** Procédé selon l'une des revendications 1 à 7, caractérisé en ce que la mise en contact de l'effluent gazeux renfermant H$_2$S et du gaz renfermant de l'oxygène libre avec le catalyseur d'oxydation est réalisée à des températures maintenues dans l'intervalle 90°C à 120°C.

**13.** Procédé selon l'une des revendications 1 à 12, caractérisé en ce que le maintien de la température de mise en contact de l'effluent gazeux renfermant H$_2$S et du gaz renfermant de l'oxygène libre avec le catalyseur d'oxydation est réalisé en utilisant un fluide circulant en échange indirect de chaleur avec ledit catalyseur.

**14.** Procédé selon l'une des revendications 9 à 13, caractérisé en ce que l'on introduit en continu dans le circuit de gaz de régénération une fraction de l'effluent gazeux renfermant H$_2$S, qui est issu du traitement combiné d'hydrogénation et d'hydrolyse appliqué au gaz résiduaire et n'a pas encore été mis en présence du gaz renfemant de l'oxygène libre et en ce que l'on évacue en continu une fraction du gaz de balayage servant à la régénération, lesdites fractions ayant des volumes substantiellement égaux.

**15.** Procédé selon la revendication 14, caractérisé en ce que la fraction de gaz de balayage évacuée est injectée en continu dans le gaz résiduaire à traiter amené au traitement combiné d'hydrogénation et d'hydrolyse.

**Claims**

**1.** Process for eliminating sulphur-containing compounds contained in a residual gas emanating directly from a CLAUS sulphur plant or emanating from a purification unit treating a residual gas from a sulphur plant using a process employing the CLAUS reaction, with recovery of the compounds in the form of sulphur, the process consisting in subjecting the residual gas to a combined hydrogenation and hydrolysis treatment in order to bring the sulphur-containing compounds it contains into the single form of H$_2$S, in cooling said effluent and bringing the cooled resultant gaseous effluent, containing H$_2$S, together with a gas containing free oxygen, in a molar ratio O$_2$:H$_2$S of from 0.5 to 3, into contact with a catalyst for the oxidation of the H$_2$S to sulphur, which catalyst comprises an active phase based on one or more oxides and/or salts of one or more transition metals which is deposited on a support and being characterised in that the gaseous effluent resulting from the combined hydrogenation and hydrolysis treatment is cooled to a temperature of between 80°C and 100°C and the bringing into contact of the cooled gaseous effluent and the gas containing free oxygen with the catalyst for the oxidation of the H$_2$S to sulphur is effected while operating at temperatures which are maintained throughout the entire duration of the period of contact at values selected between 80°C and 140°C in order to oxidise substantially quantitatively to sulphur the H$_2$S present in the gaseous effluent without forming SO$_2$ and to deposit nearly all of the sulphur formed on the catalyst and to obtain a purified current of gas which is practically free from H$_2$S.

**2.** Process according to Claim 1, characterised in that the molar ratio O$_2$:H$_2$S is from 0.5 to 1.5.

**3.** Process according to Claim 1 or 2, characterised in that the contact time of the gaseous reaction medium, formed by the gaseous effluent containing H$_2$S and by the gas containing free oxygen, with the oxidation catalyst has a value of from 0.5 second to 20 seconds, under normal pressure and temperature conditions.

**4.** Process according to Claim 3, characterised in that the contact time is from 1 second to 15 seconds.

**5.** Process according to any one of Claims 1 to 4, characterised in that the oxidation catalyst comprises an active phase that is formed by one or more oxides and/or salts of transition metals selected from nickel, cobalt, iron, copper, silver, manganese, molybdenum, chromium, tungsten and vanadium, and that is deposited on a support selected from bauxite, alumina, titanium oxide, zirconium oxide, zeolites, silica/alumina mixtures, silica/titanium oxide mixtures, silica and activated carbon.

**6.** Process according to any one of Claims 1 to 5, characterised in that the oxidation catalyst has a pore volume, determined by the mercury penetration method, of from 150 cm$^3$ to 600 cm$^3$ per litre of catalyst.

**7.** Process according to any one of Claims 1 to 6, characterised in that the active phase of the oxidation catalyst, calculated by weight of metal, represents from 0.1 to 15% of the weight of the catalyst.

**8.** Process according to Claim 7, characterised in that the active phase of the oxidation catalyst, calculated by weight of metal, represents from 0.2 to 7% of the weight of the catalyst.

**9.** Process according to any one of Claims 1 to 8, characterised in that the oxidation catalyst, charged with sulphur, is subjected periodically to regeneration by sweeping with a non-oxidising gas while operating at temperatures of between 200°C and 500°C in order to vaporise the sulphur retained on the catalyst, then the regenerated catalyst is cooled to a temperature of between 80°C and 140°C for a fresh implementation of the oxidation reaction, this cooling being effected by means of an inert gas.

10. Process according to Claim 9, characterised in that the regeneration is effected at temperatures of between 250°C and 450°C.

11. Process according to Claim 9 or 10, characterised in that the cooling gas is charged with water vapour at least during the final stage of the cooling of the regenerated catalyst.

12. Process according to any one of Claims 1 to 7, characterised in that the bringing into contact of the gaseous effluent containing $H_2S$ and the gas containing free oxygen with the oxidation catalyst is effected at temperatures maintained in the range of from 90°C to 120°C.

13. Process according to any one of Claims 1 to 12, characterised in that the maintenance of the temperature for the bringing into contact of the gaseous effluent containing $H_2S$ and the gas containing free oxygen with the oxidation catalyst is effected using a fluid circulating in indirect heat exchange with the catalyst.

14. Process according to any one of Claims 9 to 13, characterised in that a fraction of the gaseous effluent containing $H_2S$, which results from the combined hydrogenation and hydrolysis treatment applied to the residual gas and which has not yet been brought into the presence of the gas containing free oxygen, is introduced continuously into the regeneration gas circuit, and in that a fraction of the sweeping gas used for the regeneration is discharged continuously, said fractions having substantially equal volumes.

15. Process according to Claim 14, characterised in that the fraction of sweeping gas discharged is injected continuously into the residual gas to be treated brought to the combined hydrogenation and hydrolysis treatment.

**Patentansprüche**

1. Verfahren zur Abtrennung der Schwefelverbindungen, die in einem Abgas enthalten sind, das unmittelbar aus einer CLAUS-Schwefelfabrik stammt oder aus einer Reinigungsanlage austritt, die ein Abgas einer Schwefelfabrik unter Durchführung eines Verfahrens bei Anwendung der CLAUS-Reaktion behandelt, unter Gewinnung der Verbindungen in Form von Schwefel, wobei dieses Verfahren darin besteht, daß man das Abgas einer aus Hydrierung und Hydrolyse kombinierten Behandlung unterwirft, um die Schwefelverbindungen, die es enthält, ausschließlich in $H_2S$ überzuführen, den Abstrom abkühlt und den erhaltenen abgekühlten, $H_2S$ enthaltenden gasförmigen Abstrom mit einem freien Sauerstoff enthaltenden Gas bei einem Molverhältnis von $O_2 : H_2S = 0,5$ bis 3 mit einem Katalysator für die Oxidation von $H_2S$ zu Schwefel, der aus einer aktiven Phase auf der Basis eines oder mehrerer Oxide und/oder Salze eines oder mehrerer Übergangsmetalle, die auf einen Träger abgeschieden ist, besteht, in Berührung bringt, dadurch **gekennzeichnet,** daß man den aus der aus Hydrierung und Hydrolyse kombinierten Behandlung stammenden Gasabstrom auf eine Temperatur zwischen 80 und 100°C abkühlt und die Kontaktierung des abgekühlen Gasabstroms und des freien Sauerstoff enthaltenden Gases mit dem Katalysator für die Oxidation des $H_2S$ zu Schwefel bei Temperaturen durchführt, die während der gesamten Kontaktierungsdauer bei Werten, ausgewählt zwischen 80 und 140°C, gehalten werden, um den im Gasabstrom enthaltenen Schwefelwasserstoff im wesentlichen quantitativ zu Schwefel zu oxidieren, ohne $SO_2$ zu bilden und fast die gesamte Menge des gebildeten Schwefels auf dem Katalysator abzuscheiden und einen praktisch $H_2S$-freien gereinigten Gasstrom zu erhalten.

2. Verfahren nach Anspruch 1, dadurch **gekennzeichnet,** daß das Molverhältnis $O_2:H_2S$ 0,5 bis 1,5 beträgt.

3. Verfahren nach Anspruch 1 oder 2, dadurch **gekennzeichnet,** daß die Dauer der Kontaktierung des aus dem $H_2S$ enthaltenden Gasabstrom und dem freien Sauerstoff enthaltenden Gas gebildeten Reaktionsgemisches mit dem Oxidationskatalysator unter normalen Druck- und Temperaturbedingungen einen Wert zwischen 0,5 und 20 Sekunden aufweist.

4. Verfahren nach Anspruch 3, dadurch **gekennzeichnet,** daß die Kontaktierungsdauer 1 bis 15 Sekunden beträgt.

5. Verfahren nach einem der Ansprüche 1 bis 4, dadurch **gekennzeichnet,** daß der Oxidationskatalysator in einer aktiven Phase besteht, die aus einem oder mehreren Oxiden und/oder Salzen von Übergangsmetallen, ausgewählt unter Nickel, Cobalt, Eisen, Kupfer, Silber, Mangan, Molybdän, Chrom, Wolfram und Vanadium, zusammengesetzt und auf einem Träger, ausgewählt unter Bauxit, Tonerde, Titanoxid, Zirconiumoxid, Zeolithen, Gemischen aus Kiesel- und Tonerde, Gemischen aus Kieselerde und Titanoxid sowie Kieselerde und Aktivkohle, abgeschieden ist.

6. Verfahren nach einem der Ansprüche 1 bis 5, dadurch **gekennzeichnet,** daß der Oxidationskatalysator ein Porenvolumen, ermittelt nach dem Verfahren des Quecksilbereindringvermögens, von 150 bis 600 cm$^3$ pro Liter Katalysator aufweist.

7. Verfahren nach einem der Ansprüche 1 bis 6, dadurch **gekennzeichnet,** daß die aktive Phase des Oxidationskatalysators, bezogen auf das Gewicht des Metalls, 0,1 bis 15% des Gewichts des Katalysators ausmacht.

8. Verfahren nach Anspruch 7, dadurch **gekennzeichnet,** daß die aktive Phase des Oxidationskatalysators, bezogen auf das Gewicht des Metalls, 0,2 bis 7 % des Gewichts des Katalysators ausmacht.

9. Verfahren nach einem der Ansprüche 1 bis 8, dadurch **gekennzeichnet,** daß der mit Schwefel beladene Oxidationskatalysator von Zeit zu Zeit durch Spülen mit einem nichtoxidierenden Gas bei Temperaturen zwischen 200 und 500°C regeneriert wird, um den auf dem Katalysator zurückgehaltenen Schwefel zu verdampfen, wonach der regenerierte Katalysator bis auf eine Temperatur zwischen 80 und 140°C für eine erneute Verwendung für die Oxidationsreaktion abgekühlt wird, wobei diese Abkühlung mit Hilfe eines Inertgases durchgeführt wird.

10. Verfahren nach Anspruch 9, dadurch **gekennzeichnet,** daß die Regeneration bei Temperaturen zwischen 250 und 450°C durchgeführt wird.

11. Verfahren nach Anspruch 9 oder 10, dadurch **gekennzeichnet,** daß das Gas für die Abkühlung wenigstens während der Endphase der Abkühlung des regenerierten Katalysators mit Wasserdampf beaufschlagt wird.

12. Verfahren nach einem der Ansprüche 1 bis 7, dadurch **gekennzeichnet,** daß die Kontaktierung des $H_2S$ enthaltenden Gasabstroms und des freien Sauerstoff enthaltenden Gases mit dem Oxidationskatalysator bei Temperaturen durchgeführt wird, die in einem Bereich zwischen 90 und 120°C gehalten werden.

13. Verfahren nach einem der Ansprüche 1 bis 12, dadurch **gekennzeichnet,** daß die Aufrechterhaltung der Temperatur für die Kontaktierung des $H_2S$ enthaltenden Gasabstroms und des freien Sauerstoff enthaltenden Gases mit dem Oxidationskatalysator unter Verwendung eines im indirekten Wärmeaustausch mit dem Katalysator umlaufenden Fluids erfolgt.

14. Verfahren nach einem der Ansprüche 9 bis 13, dadurch **gekennzeichnet,** daß man dem Kreislauf des Regenerationsgases kontinuierlich einen Anteil des $H_2S$ enthaltenden Gasabstroms, der aus der aus Hydrierung und Hydrolyse kombinierten Behandlung stammt, der das Abgas unterworfen wurde, und der noch nicht der Einwirkung des freien Sauerstoff enthaltenden Gases ausgesetzt war, zuführt und man kontinuierlich einen Anteil des für die Regeneration verwendeten Spülgases ableitet, wobei die einzelnen Anteile im wesentlichen gleiche Volumina aufweisen.

15. Verfahren nach Anspruch 14, dadurch **gekennzeichnet,** daß der Anteil des abgeleiteten Spülgases kontinuierlich in das der aus Hydrierung und Hydrolyse kombinierten Behandlung zugeführte, zu behandelnde Abgas eingespritzt wird.